(19) Europäisches Patentamt
European Patent Office
Office européen des brevets

(11) Veröffentlichungsnummer: **0 023 642**
**A1**

# (12) EUROPÄISCHE PATENTANMELDUNG

(21) Anmeldenummer: **80104209.4**

(22) Anmeldetag: **18.07.80**

(51) Int. Cl.³: **B 01 D 53/34**
// B01J20/06

(30) Priorität: **01.08.79 DE 2931169**

(43) Veröffentlichungstag der Anmeldung: **11.02.81**
**Patentblatt 81/6**

(84) Benannte Vertragsstaaten: **AT BE DE FR GB LU NL**

(71) Anmelder: **Kommanditgesellschaft "ALBERTA" Chemische Fabrik GmbH & Co, Gerhofstrasse 10-12, D-2000 Hamburg 36 (DE)**

(72) Erfinder: **Zopff, Hans, Wilmsdorf, D-2401 Ratekau (DE)**
Erfinder: **Müller, Hans-Ekkehard, Dipl.-Ing., Krietkamp 34, D-2000 Hamburg 64 (DE)**

(74) Vertreter: **Glawe, Richard, Dr. Dipl.-Ing. et al, Glawe, Delfs, Moll & Partner Rothenbaumchaussee 58, D-2000 Hamburg 13 (DE)**

## (54) Verfahren zur Beseitigung von sauren Komponenten aus Abgasen.

(57) Saure Bestandteile, insbesondere HF, HCl, $SO_2$ und $SO_3$, werden aus Abgasen durch Adsorption entfernt. Als Adsorptionsmittel wird ein Gemisch aus Rotschlamm und Erdalkali- bzw. Aluminiumhydroxid, insbesondere Calciumoxid, verwendet, das durch Reaktion von Erdalkalioxiden bzw. Aluminiumoxid mit stöchiometrischen Mengen Wasser in Gegenwart von Rotschlamm hergestellt worden ist.

EP 0 023 642 A1

## Beschreibung

Die Erfindung betrifft ein Verfahren zur Beseitigung von sauren Komponenten aus Abgasen durch in den Abgasstrom eingegebene feinteilige basische Adsorptionsmittel.

In industriellen Anlagen, z.B. Müllverbrennungsanlagen, Heizkraftwerken auf Mineralöl- oder Kohlebasis, Hüttenwerken, Zementfabriken und dergl. fallen große Mengen von Abgasen an, die saure Bestandteile, insbesondere HF, HCl, $SO_2$ und $SO_3$ enthalten.

Zur Entfernung dieser sauren Bestandteile sind eine Vielzahl von Verfahren bekannt geworden, z.B. katalytische Konversion, Adsorption an festen oder beweglichen CaO-Betten, Adsorption in Kalkmilch ($Ca(OH)_2$-Suspensionen) und dergl.

Eine Übersicht über Verfahren der eingangs genannten Art findet sich in "Systemanalyse Entschwefelungsverfahren", Teil B, Hrsg.: VGB Technische Vereinigung der Großkraftwerksbetreiber e.V., Essen, November 1974, Seiten 248-253. Die dort beschriebenen Verfahren betreffen zwar die $SO_2$- und $SO_3$-Adsorption an CaO-Betten, derartige Verfahren sind jedoch auch zur Adsorption von anderen sauren Komponenten anwendbar.

Feinteiliges Calciumoxid, das gemäß den vorgenannten Verfahren als Adsorptionsmittel verwendet wird, weist eine geringe Oberfläche und demzufolge einen geringen stöchiometrischen Wirkungsgrad bezüglich der Adsorption durch chemische Bindungen der sauren Abgaskomponenten auf. Die Erfindung ist demzufolge auf ein Resorptionsverfahren gerichtet, bei dem ein spezielles, besonders reaktives basisches Resorptionsmittel verwendet werden kann.

...

Diese Aufgabe wird erfindungsgemäß dadurch gelöst, daß man als Adsorptionsmittel ein Gemisch aus Rotschlamm und Erdalkali- bzw. Aluminiumhydroxid verwendet, das durch Reaktion von Erdalkalioxiden bzw. Aluminiumoxid mit im wesentlichen stöchiometrischen Mengen Wasser in Gegenwart von Rotschlamm hergestellt worden ist.

Das Verfahren der Erfindung bietet folgende Vorteile:

1. Die erfindungsgemäß eingesetzten Adsorptionsmittel weisen einen günstigeren stöchiometrischen Faktor als Calciumoxid bzw. festes Calciumhydroxid auf.

2. Es wird eine neue Verwertungsmöglichkeit für den in großen Mengen zur Verfügung stehenden, größtenteils bisher ungenutzten Rotschlamm bereitgestellt.

3. Sofern die bisher bekannt gewordenen Adsorptionsverfahren eine Naßwäsche erfordern, entfällt bei dem Verfahren der Erfindung die Notwendigkeit, das gereinigte Abgas nach der Naßwäsche und vor der Einleitung in Kamine wieder aufzuheizen; hierdurch ist eine beträchtliche Energieersparnis gegeben.

Rotschlamm/Calciumhydroxid-Gemische, wie sie in dem Verfahren der Erfindung verwendet werden können, sind aus der DE-OS 25 33 791, Beispiel 8, bekannt. Dort ist angegeben, daß derartige Gemische als Füllstoffe eingesetzt werden können. Die gleiche Zusammensetzung ist in der DE-OS 25 33 789 beschrieben.

Die Herstellung der erfindungsgemäß einzusetzenden Rotschlamm/Hydroxid-Gemische kann in der folgenden Weise erfolgen:

1. gemäß DE-OS 23 28 777 und 23 28 778 kann man in Wasser schwer lösliche Stoffe mit Erdalkali- bzw. Aluminiumoxid versetzen, wobei die genannten Oxide mit hydrophobierenden Substanzen, die

...

die Reaktion mit Wasser verzögern, vorbehandelt worden sind. Anstelle der dort genannten schwerlöslichen organischen Stoffe kann man ohne weiteres auch Rotschlamm einsetzen. Danach läßt man die Oxide mit dem im System vorhandenen Wasser (Rotschlamm ist im allgemeinen wasserhaltig) bzw. mit annähernd stöchiometrischen Mengen Wasser zum Hydroxid reagieren. Als Erdalkalioxid ist insbesondere Calciumoxid geeignet.

Im Verlauf der Reaktion des Calciumoxids mit Wasser zu Calciumhydroxid werden die Rotschlammteilchen außerordentlich fein und gleichmäßig auf der sich bildenden Calciumhydroxidphase adsorbiert.

2. Ein ähnliches Verfahren ist in den bereits genannten DE-OS 25 33 789 bzw. DE-OS 25 33 791 beschrieben; hier wird jedoch von nichthydrophobierten Erdalkalioxiden bzw. Aluminiumalkoholat ausgegangen. Um zu verhindern, daß die Reaktion so abläuft, daß zunächst die Hydroxid-Phase gebildet wird und anschließend die Rotschlammadsorption erfolgt, wird so verfahren, daß man die Reaktion zwischen dem wasserhaltigen Rotschlamm und dem Calciumoxid in einem hochtourig arbeitenden Mischwerk vornimmt. Sollte die Reaktion zu heftig verlaufen, kann man sie durch Zugabe von höhersiedenden Alkoholen verzögern.

Bezüglich weiterer Einzelheiten der Herstellung des erfindungsgemäß eingesetzten Adsorptionsmittels wird auf die vorgenannten Vorveröffentlichungen sowie die nachfolgende Beschreibung verwiesen.

I.

Herstellung eines Rotschlamm/Calciumhydroxid-Gemisches.

24 kg Rotschlamm mit einem Feuchtigkeitsgehalt von ca. 50% werden in einem hochtourig arbeitenden Mischwerk bei 2000 Upm mit 17 kg CaO vermischt. Unter Berücksichtigung des Umstands, daß während der stark exothermen Reaktion Wasser verdampft, be-

...

trägt das in dem System gegebene CaO/Wasser/Molverhältnis 1:1.

Die Reaktion setzt nahezu augenblicklich ein und erreicht rasch 100° C unter beträchtlicher Dampf- und Staubentwicklung. Nach fünf Minuten ist die Reaktionstemperatur auf 80° C abgesunken. Man erhält ein staubtrockenes Pulver, das unter dem Elektronenmikroskop große Calciumhydroxid-Teilchen mit an der Oberfläche adsorbierten kleineren Rotschlamm-Teilchen aufweist.

Die chemische Analyse des so erhaltenen Adsorptionsmittels ergab die folgenden Werte:

| Verbindung | % Gehalt |
|---|---|
| $Ca(OH)_2$ | 53,0 |
| $SiO_2$ | 3,8 |
| $Fe_2O_3$ | 14,9 |
| $TiO_2$ | nicht bestimmt |
| $Al_2O_3$ | 4,2 |
| $Na_2O$ | 4,4 |
| Glühverlust | 2,9 |

Das spezifische Gewicht des Produktes beträgt 2,77 g/$cm^3$.

II.

Beschreibung der Versuchsanlage

Es wurde eine halbtechnische Anlage zur Abtrennung von sauren Komponenten eines heißen Abgasstroms mit feinteiligen basischen Adsorptionsmitteln verwendet. In der Versuchsanlage wurden definierte Mengen HCl in eine Erdgasflamme eingedüst. Die Verbrennungsgase durchströmten eine horizontale Reaktionsstrecke, in die das Rotschlamm/Calciumhydroxid-Gemisch über eine pneumatische Fördereinrichtung eingeblasen wurde. An das Reaktionsrohr schloß sich ein Gewebefilter an, durch das die HCl-beladenen Staubpartikel von den Rauchgasen getrennt wurden. Zur

...

Messung der HCl-Konzentrationen wurden kontinuierlich oder quasikontinuierlich arbeitende Gasanalysatoren eingesetzt.

Die Betriebsparameter der Versuchsanlage konnten in weiten Grenzen variiert werden, so daß man Aussagen über die Adsorptionsgrade in Abhängigkeit von den Parametern Volumenstrom, Reaktionstemperatur, Abgasfeuchte, Dosierung des Adsorptionsgemisches und Art des Adsorptionsmittel gewinnen konnte.

III.

Vergleichende Untersuchungen über die Abscheidung von HCl an Rotschlamm/Calciumhydroxid bzw. festem Calciumhydroxid.

Zum Vergleich der vorgenannten Adsorptionsmittel in der oben beschriebenen Anlage wurden alle anderen Betriebsparameter während der Versuchsserie weitestgehend konstant gehalten. Als saure, im Abgas enthaltene Komponente wurde HCl ausgewählt, da dessen Anteil in den hier simulierten Abgasen bei Müllverbrennungsanlagen besonders groß ist, und weil auf dem Gebiet der HCl-Abscheidung schon Erfahrungen durch zahlreiche Untersuchungen an dieser Anlage vorlagen.

Die HCl-Konzentrationen im Abgasstrom wurden mit den quasi-kontinuierlich arbeitenden "Sensimeter-G" der Firma Bran & Lübbe verfolgt.

Die Abscheidung von HCl erfolgte einerseits an reinem Calciumhydroxid zu Vergleichszwecken und andererseits mit dem eingangs genannten Rotschlamm/Calciumhydroxid-Gemisch. Von jedem Adsorptionsmittel wurden drei verschiedene Mengen pro Zeiteinheit zudosiert; die Abscheidungsgrade beider Adsorptionsmittel wurden miteinander verglichen. Dabei bezeichnete der Abscheidungsgrad den Quotienten aus abgeschiedener und zudosierten HCl-Menge. Der Abscheidungsgrad für beide Adsorptionsmittel wurde sowohl über

...

den Massenfluß pro Zeiteinheit in einem Diagramm aufgetragen (Abb. 1) als auch über den jedem Massenfluß zugeordneten stöchiometrischen Faktor (Abb. 2). Die Abscheidungsgrade von je zwei Versuchen wurden gemittelt. Der stöchiometrische Faktor ist der Quotient aus tatsächlich zudosierter und stöchiometrisch notwendiger Adsorptionsmittelmenge. Hierbei ergeben sich zwischen den beiden Abbildungen Unterschiede, da der stöchiometrische Faktor für Calciumhydroxid ungünstiger als für das Rotschlamm/Calciumhydroxid-Gemisch ist.

Nach der chemischen Reaktionsgleichung

$$Ca(OH)_2 + 2HCl \longrightarrow CaCl_2 + 2H_2O$$

sind zur Bindung von zwei Mol HCl (73 g) 1 Mol $Ca(OH)_2$ (74 g) erforderlich. Dies sind die stöchiometrischen Verhältnisse bei vollständigem Reaktionsablauf; sie werden als stöchiometrischer Faktor 1 bezeichnet. Bei dem untersuchten Rotschlamm/Calciumhydroxid-Gemisch hat das stöchiometrische Verhältnis von Adsorptionsmittel zu HCl entsprechend der Analyse, bezogen auf Calciumhydroxid, einen Wert von 1,3, da die Rotschlammanteile entsprechend ihrem prozentualen Anteil berücksichtigt werden müssen, d.h. gleiche Mengen des Rotschlammgemisches können theoretisch die 1,3-fache Menge an HCl binden.

IV.

Versuchsparameter und Ergebnisse

Die Versuchsparameter und die Versuchsergebnisse sind in der Tabelle zusammengefaßt.

Die Versuche wurden solange gefahren, bis sich eine zur jeweilig zudosierten Adsorptionsmittelmenge zugehörige HCl-Reingaskonzentration konstant einstellte. Die Abgasfeuchte wurde auf etwa 8% eingestellt. Die Reaktionstemperatur betrug ca. 219° C.

...

Pro Versuch wurden 2000, 1000 bzw. 500 g Adsorptionsmittel zudosiert. Die HCl-Konzentrationen wurden sowohl rohgasseitig als auch reingasseitig gemessen. Die Abscheidegrade ändern sich entsprechend dem stöchiometrischen Faktor bei der Additivdosierung.

| Versuchs-nummer | Abgasfeuchte | Reaktions-temperatur | Adsorptions-mittel | Additiv-dosierung | HCl-Konzen-tration vor der Adsorption | Abscheide-grad |
|---|---|---|---|---|---|---|
| - | % | ° C | - | g/h | mg/$Nm^3$ | % |
| 1 | 7,7 | 282 | $Ca(OH)_2$ | 2000 | 1421 | 89,7 |
| 2 | 7,7 | 282 | $Ca(OH)_2$ | 1000 | 1421 | 83,0 |
| 3 | 7,7 | 282 | $Ca(OH)_2$ | 500 | 1421 | 73,0 |
| 4 | 7,9 | 288 | Rot*/$Ca(OH)_2$ | 2000 | 1469 | 96,6 |
| 5 | 7,9 | 288 | Rot*/$Ca(OH)_2$ | 1000 | 1469 | 95,7 |
| 6 | 7,9 | 288 | Rot*/$Ca(OH)_2$ | 500 | 1469 | 88,3 |
| 7 | 8,2 | 291 | Rot*/$Ca(OH)_2$ | 2000 | 1521 | 95,7 |
| 8 | 8,5 | 288 | Rot*/$Ca(OH)_2$ | 1000 | 1579 | 92,1 |
| 9 | 8,4 | 289 | Rot*/$Ca(OH)_2$ | 500 | 1556 | 79,7 |
| 10 | 8,1 | 292 | $Ca(OH)_2$ | 2000 | 1512 | 95,6 |
| 11 | 8,1 | 292 | $Ca(OH)_2$ | 1000 | 1512 | 92,1 |
| 12 | 8,1 | 292 | $Ca(OH)_2$ | 500 | 1512 | 87,3 |

**Tabelle**

Rot* = Rotschlamm

0023642

GLAWE, DELFS, MOLL & PARTNER

PATENTANWALTE
ZUGELASSENE VERTRETER BEIM EUROPÄISCHEN PATENTAMT

RICHARD GLAWE
DR.-ING

KLAUS DELFS
DIPL.-ING

ULRICH MENGDEHL
DIPL.-CHEM. DR. RER. NAT

WALTER MOLL
DIPL.-PHYS. DR. RER. NAT.
ÖFF. BEST. DOLMETSCHER

HEINRICH NIEBUHR
DIPL.-PHYS. DR. PHIL. HABIL

8000 MÜNCHEN 26
POSTFACH 37
LIEBHERRSTR. 20
TEL. (089) 22 65 48
TELEX 52 25 05 SPEZ

2000 HAMBURG 13
POSTFACH 25 70
ROTHENBAUM-
CHAUSSEE 58
TEL. (040) 4 10 20 08
TELEX 21 29 21 SPEZ

HAMBURG



Kommanditgesellschaft
'ALBERTA', Chemische Fabrik GmbH&Co.,
Hamburg

Verfahren zur Beseitigung von sauren Komponenten aus Abgasen

p 9721/80 EU
M/ad-ab

## Patentansprüche

1. Verfahren zur Beseitigung von sauren Komponenten aus Abgasen durch in den Abgasstrom eingegebene feinteilige basische Adsorptionsmittel, dadurch gekennzeichnet, daß man als Adsorptionsmittel ein Gemisch aus Rotschlamm und Erdalkali- bzw. Aluminiumhydroxid verwendet, das durch Reaktion von Erdalkalioxiden bzw. Aluminiumoxid mit stöchiometrischen Mengen Wasser in Gegenwart von Rotschlamm hergestellt worden ist.

2. Verfahren nach Anspruch 1, dadurch gekennzeichnet, daß man als Erdalkalioxid Calciumoxid verwendet.

3. Verfahren nach Anspruch 1 oder 2, dadurch gekennzeichnet, daß das Adsorptionsmittel ein Gewichtsverhältnis von Calciumoxid:Rotschlamm von 1:1 - 3:1 aufweist.

...

1/2

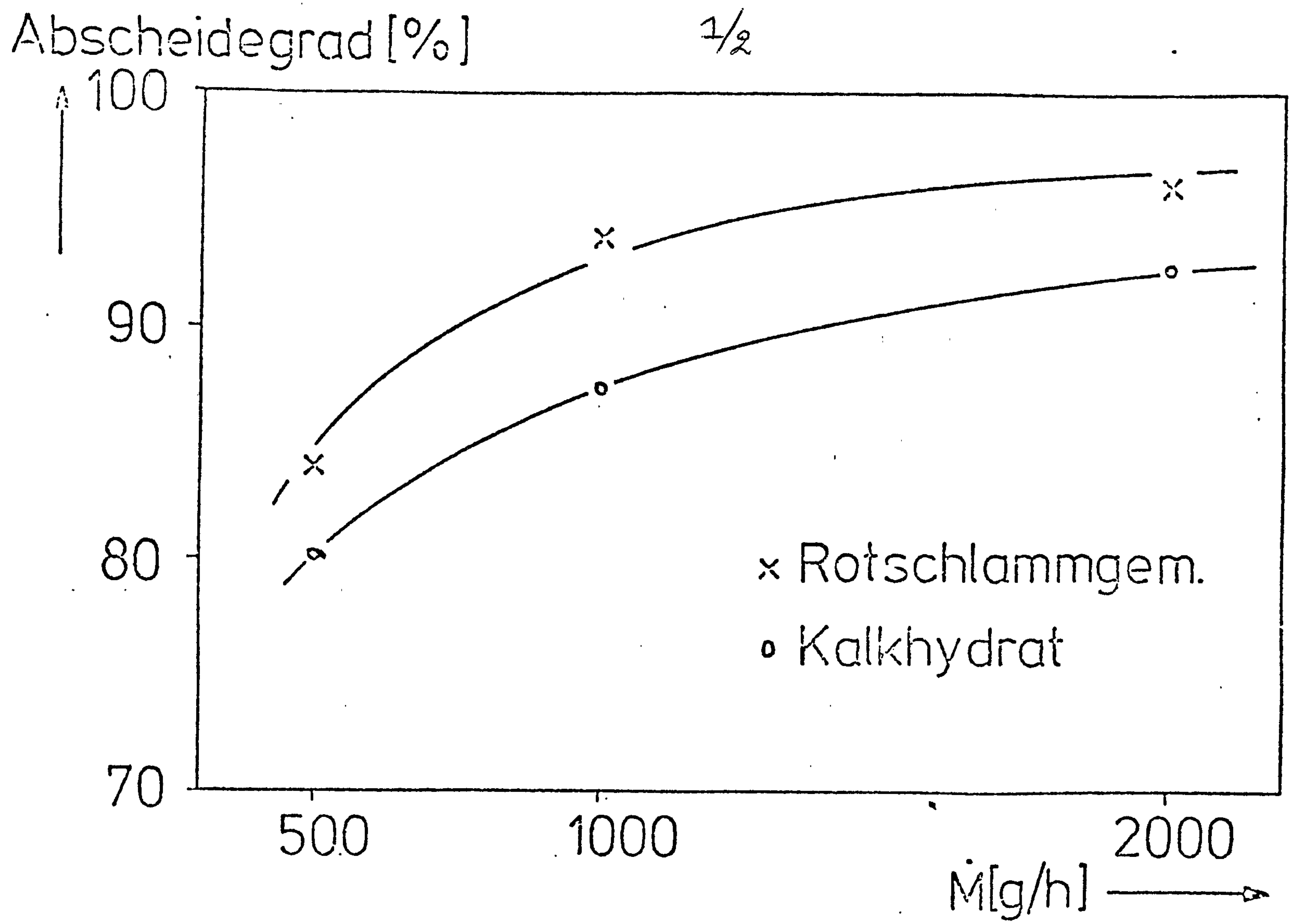


Abbildung 1

2/2

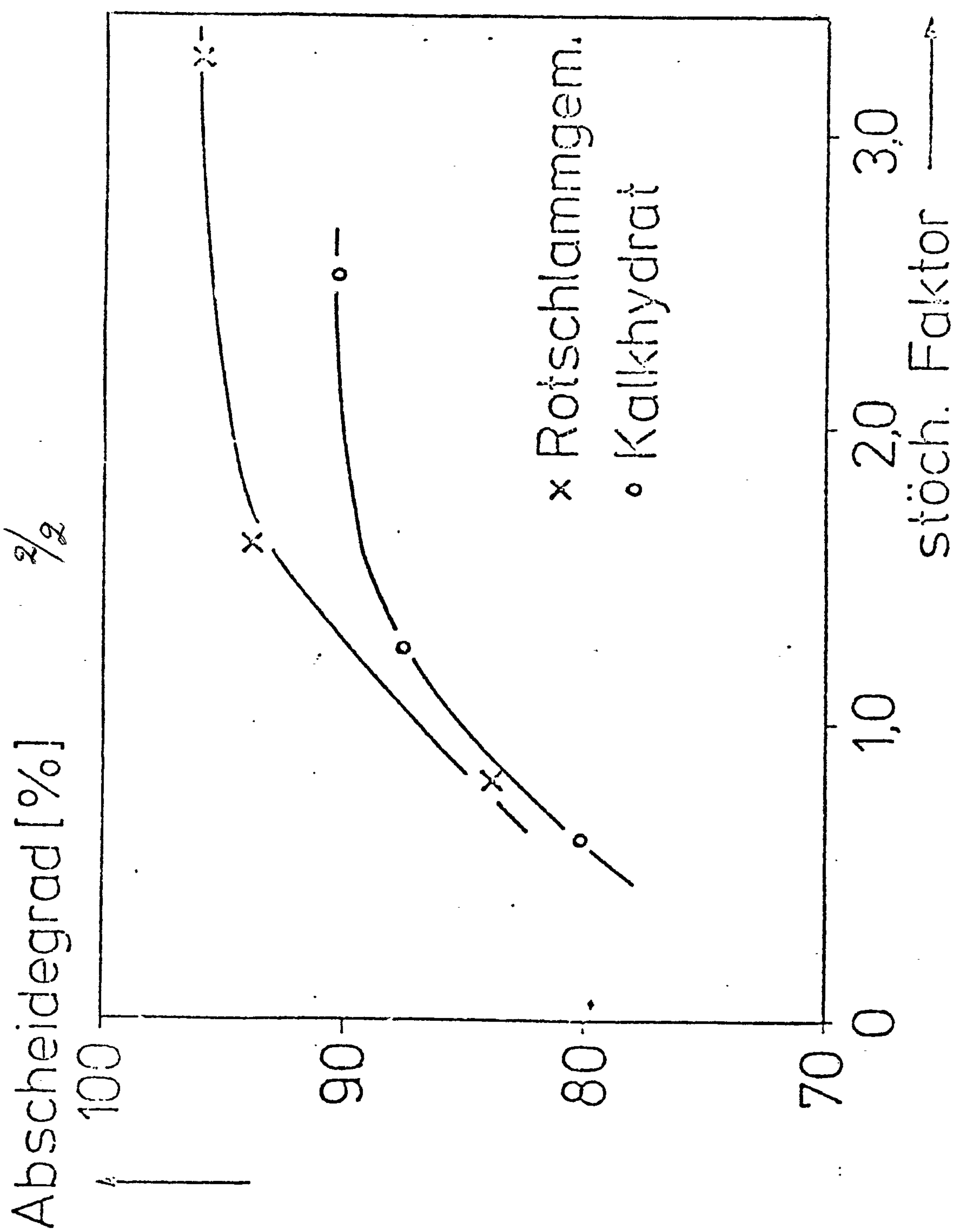


Abbildung 2

0023642

Europäisches Patentamt

**EUROPÄISCHER RECHERCHENBERICHT**

Nummer der Anmeldung
EP 80 10 4209.4

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | DE - C - 966 297 (MAATSCHAPPIJ VOOR KOLENBEWERKING STAMICARBON) * Anspruch 1; Seite 3, Zeilen 20 bis 28 * -- | 1,2 | B 01 D 53/34 //B 01 J 20/06 |
| | DE - B - 1 052 623 (R. SCHRADER et al.) * Ansprüche 1, 2 * -- | 1 | |
| | DE - B1 - 2 836 201 (KLÖCKNER-WERKE) * Beispiel 2 * -- | 1,2 | RECHERCHIERTE SACHGEBIETE (Int. Cl.3) |
| | DE - A1 - 2 707 650 (H. HÖLTER) * Anspruch 1 * -- | 1 | B 01 D 53/34 B 01 J 20/02 B 01 J 20/04 B 01 J 20/06 B 01 J 20/08 |
| | DD - A - 10 174 (G. GRUSON et al.) * Anspruch 1 * ---- | 1 | |
| X | Der vorliegende Recherchenbericht wurde für alle Patentansprüche erstellt. | | |

KATEGORIE DER GENANNTEN DOKUMENTE
X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| Recherchenort | Abschlußdatum der Recherche | Prüfer |
|---|---|---|
| Berlin | 31-10-1980 | KÜHN |